# EUROPEAN PATENT SPECIFICATION

(11) **EP 1 591 738 B1**
(45) Date of publication and mention of the grant of the patent: **17.09.2008**
(21) Application number: 03721001.0
(22) Date of filing: 30.04.2003
(51) Int. Cl.: F27B 3/08, F27D 11/02, H05B 7/12, C01B 31/04

(54) **GRAPHITE ELECTRODE FOR STEELMAKING**
GRAFITELEKTRODE FÜR STAHLERZEUGUNG
ELECTRODE EN GRAPHITE UTILISEE DANS L'ELABORATION DE L'ACIER

(30) Priority: 10.01.2003 JP 2003004029
(43) Date of publication of application: 02.11.2005
(73) Proprietor: Tokai Carbon Company, Ltd., Minato-ku, Tokyo 107-8636 (JP)
(72) Inventor: SHIRAISHI, Chizuhiro, Minato-ku, Tokyo 107-8636 (JP); HAINO, Kazuyoshi, Minato-ku, Tokyo 107-8636 (JP); TSUCHIYA, Masakatsu, Minato-ku, Tokyo 107-8636 (JP)
(74) Representative: Müller-Wolff, Thomas
(86) International application number: PCT/JP2003/005563
(87) International publication number: WO 2004/063651

(56) References cited:
- EP-A2- 0 827 365
- DE-A1- 3 347 069
- DE-C- 901 221
- DE-U1- 8 716 883
- US-A- 5 795 539

## Description

### TECHNICAL FIELD

The present invention relates to a graphite electrode for an electric arc furnace. More particularly, the present invention relates to an improvement of a graphite electrode for an electric arc furnace used for steelmaking which is operated while cooling the graphite electrode which protrudes upward from the furnace roof.

### BACKGROUND ART

A graphite electrode for an electric arc furnace used for steelmaking produces an arc and causes a raw material to melt. Since the graphite electrode reaches high temperatures due to the arc, oxidation and sublimation of the graphite electrode occur. Moreover, the tip portion of the electrode rapidly wears away due to slug corrosion or the like. Therefore, the graphite electrode is replenished from outside the furnace by connecting graphite electrodes in succession in order to compensate for the wear.

In this case, the outer surface of the graphite electrode is oxidized and consumed due to an increase in temperature of the electrode, whereby the electrode consumption rate is increased. This may result in a breakage accident during the operation. Therefore, in order to suppress oxidation and consumption of the outer surface of the electrode, a method of cooling the graphite electrode by spraying a cooling liquid onto the surface of the graphite electrode at a location above the furnace roof has been proposed (United States Patent No. 4,852,120).

In order to increase the cooling effect in the above method of cooling the graphite electrode by spraying a cooling liquid onto the surface of the graphite electrode at a location above the furnace roof, a method of spraying a cooling liquid so as to be spread in the range at an angle of inclination of -10° downward and an angle of inclination of +10° upward with respect to the horizontal level has also been proposed (United States Patents No. 1,911,119 and No. 5,795,539).

From document DE 33 47 069 A1 a graphite electrode tor the production of steel is known, which is cooled with water during use and which has on its surface ribs or alternatively slots, into which graphite slabs can be inserted. The slabs or ribs form protrusions on a cylindrical electrode surface-part and increase the total surface of the electrode. Thus the amount of heat that can be removed during cooling by radiation from the surface is increased and cooling is improved.

From document DE 87 16 883 U1 a graphite electrode is known, which consists of single, cylindrical parts, that are connected via threaded ends. In continuous use further parts are connected with their conical, lower portion, having a male thread, to the top-end of the upper part of the assembled electrode, having a female thread. Stability of the assembled electrode is increased by using conical ends having a ratio of bottom surface to top surface between 1,5 and 2 and a ratio of total length to bottom diameter between 0,5 and 1,5 in combination with non-threaded sections at top and bottom of at least 15 mm. During use the threaded portions form tight connections in the internal structure of the electrode.

From document DE 901 221 another graphite electrode consisting of several parts, that are being connected via threaded ends, is known. The stability of said assembled electrode is improved by applying a male thread, that starts close to the outer surface of the electrode and which is located on a cone, having a slope 55 to 60 degrees.

### DISCLOSURE OF THE INVENTION

An artificial graphite electrode for an electric arc furnace used for steelmaking is produced by adding a binder pitch to raw material coke, and kneading the mixture, followed by extrusion, primary baking, pitch impregnation, rebaking, graphitization, and machining into predetermined dimensions. The graphite electrode shows better characteristics as the graphitization progresses. However, hydrophilicity of the surface of the electrode tends to decrease as the graphitization progresses. Therefore, in the case of cooling the graphite electrode for steelmaking by spraying a cooling liquid onto the surface of the graphite electrode, the cooling effect is decreased since the surface of the electrode repels the cooling liquid, whereby the oxidation prevention effect cannot be obtained sufficiently.

The present inventors have conducted a number of experiments and studies on the structure of the electrode for obtaining hydrophilicity of the surface of the graphite electrode for an electric arc furnace used for steelmaking which is sufficiently graphitized and has good characteristics for use, and found that hydrophilicity can be obtained by forming an uneven structure on the surface of the electrode, whereby the cooling effect can be increased.

The present invention has been achieved based on the above findings. An object of the present invention is to provide a graphite electrode for an electric arc furnace used for steelmaking used for an electric steelmaking furnace operated while cooling the graphite electrode by spraying a cooling liquid onto the outer surface of the graphite electrode which protrudes upward from the furnace roof, which has large water retention characteristics, provides a sufficient cooling effect, and reduces the electrode consumption rate by preventing oxidation and consumption.

The above object is achieved by a graphite electrode for electric arc furnace used for steelmaking which is operated while cooling the graphite electrode by spraying a cooling liquid onto the outer surface of the graphite electrode which protrudes upward from the furnace roof by spraying a cooling liquid onto the surface of the graphite electrode, wherein a spiral groove is formed on the outer surface of the graphite electrode, said spiral groove having a spiral angle of 45° or more but less than 90°, a groove pitch P of 0.2 to 10 mm and a groove depth h of 0.2 to 5 mm.

### BRIEF DESCRIPTION OF THE DRAWINGS

FIG. 1 is a partial schematic front view of an example of a graphite electrode of the present invention.
FIG 2 is an enlarged view of a portion A shown in FIG. 1.

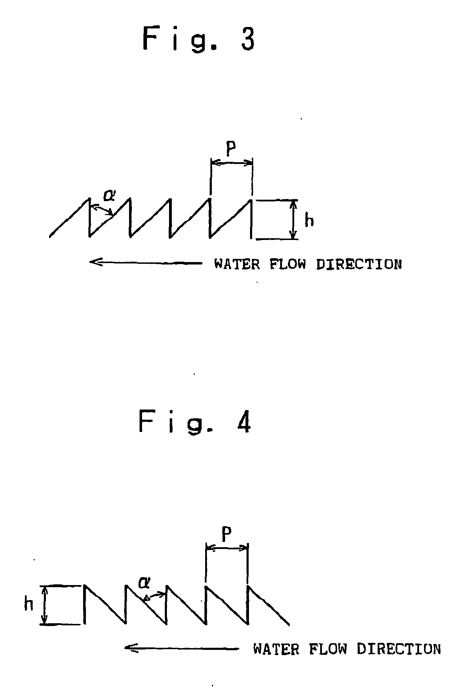

FIG. 3 is a view showing another example of an uneven structure.
FIG. 4 is a view showing yet another example of an uneven structure.
FIG. 5 is a graph showing the relationship between the amount of water supply and the amount of water retention of an electrode according to the present invention.
FIG. 6 is a graph showing the relationship between the height of a projection of an uneven surface structure and the amount of water retention of an electrode of the present invention.

### BEST MODE FOR CARRYING OUT THE INVENTION

In the present invention, the uneven structure includes a structure in which grooves are formed on the surface of the electrode in the direction perpendicular to or parallel to the axis direction of the electrode, resulting in a structure in which a spiral groove is formed.

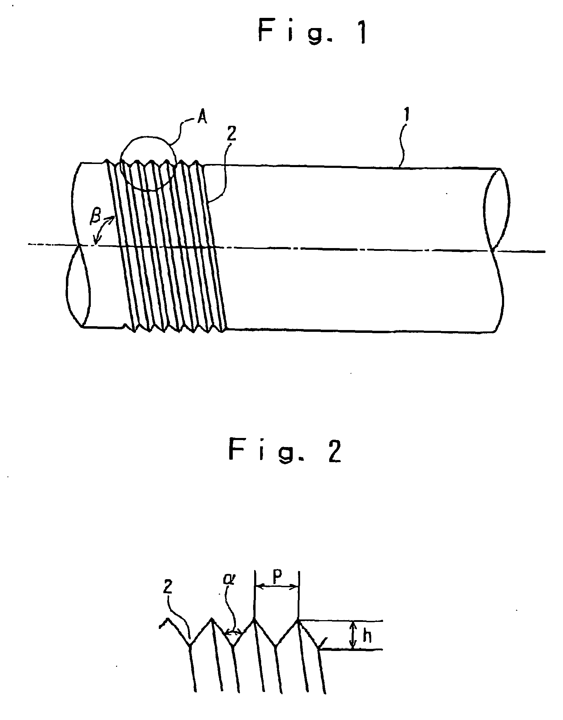

A structure in which a spiral groove 2 is formed on the surface of a graphite electrode 1 as shown in FIGS. 1 and 2 is most preferable in practice from the viewpoint of ease of working and can be made by machining such as lathing. The uneven structure may be formed on the entire surface of the electrode. The uneven structure may be formed on the surface of the electrode excluding the holding portion.

According to the invention, the spiral angle β of the spiral groove 2 is in the range of 45° or more but less than 90°. The interval (pitch) P between the unevenness is in the range of 0.2 to 10 mm. If the spiral angle is less than 45°, the water retention effect is reduced. If the pitch P is less than 0.2 mm, the water retention effect is insufficient. If the pitch P exceeds 10 mm, the electrode cannot be held properly. In the case of forming a V-shaped groove (groove shown in FIGS. 1 and 2), the depth of the groove is increased, whereby the effective strength of the electrode decreases.

The height (difference in height) h of the projection of the uneven structure is 0.2 to 5 mm, and still more preferably 0.3 to 2 mm. If the height h is less than 0.2 mm, the water retention effect is insufficient. If the height h exceeds 5 mm, the effective strength of the electrode decreases, whereby the electrode tends to break. In the case of forming the uneven structure over the entire surface of the electrode, the upper limit of the pitch of the unevenness and the height of the projection is selected depending on the size of the electrode so that the electrode does not break due to a decrease in effective strength or the electrode can be held properly.

The cooling liquid sprayed onto the surface of the electrode from a sprayer or a nozzle shower functions as described below while flowing on the surface of the electrode by forming the uneven structure on the surface of the electrode, thereby contributing to an increase in cooling efficiency of the electrode.
(1) The flow rate of the cooling liquid is reduced due to the uneven structure on the surface of the electrode. This allows a film of the cooling liquid to uniformly spread over the surface of the electrode. Moreover, since the thickness of the film is increased, the water retention effect is increased. This contributes to improvement of the cooling effect.
(2) The surface area of the electrode, specifically, the heat transfer area for the cooling liquid is increased.
(3) Since the normal boiling area is increased, the heat removal effect due to vaporization heat is increased.

In addition, the coefficient of heat transfer from the surface of the electrode to the surface of the cooling liquid film is apparently increased due to the stirring effect of the cooling liquid caused by the uneven structure.

As the cooling liquid, water (industrial water) is generally used. The water retention effect of the surface of the electrode can be increased by adding a surfactant to the water. The water retention effect can also be increased by applying a surfactant to the surface of the electrode. An aqueous solution of an antioxidant may be used instead of water.

Examples of the present invention arc described below while comparing the examples with a conventional graphite electrode (comparative example) which has a smooth surface without being provided with the uneven structure. However, the following examples illustrate only one embodiment of the present invention and should not be construed as limiting the present invention. Examples and Comparative Example

An uneven structure of a spiral groove was formed on the surface of a graphite electrode having a diameter of four inches and a length of 350 mm by subjecting the graphite electrode to spiral groove processing under conditions shown in Table 1. The electrode was suspended through a load cell, and cooling water was sprayed onto the surface of the electrode from a cooling waler spray nozzle disposed around the electrode at a water spraying rate of 4 Umin and allowed to flow on the surface of the electrode. An increase in the weight of the electrode was measured by using the load cell to calculate the amount of water retention (amount of water retention = weight of electrode after spraying cooling water and allowing cooling water to flow - weight of electrode before spraying cooling water).

**TABLE 1**

| | Test example Nc. | Spiral groove | | | | | | |
|---|---|---|---|---|---|---|---|---|
| | | Groove shape | Groove angle □ (□) | Groove pitch p (mm) | Groove depth h (mm) | Groove angle □ (°) | Number of grooves | Amount of water retention (kg) |
| Example | 1 | V-shaped groove | 90 | 0.5 | 0.25 | 89.9 | 1 | 0.055 |
| | 2 | V-shaped groove | 90 | 1.0 | 0.50 | 89.8 | 1 | 0.075 |
| | 3 | \/-shaped groove | 90 | 2.0 | 1.00 | 89.6 | 1 | 0.101 |
| | 4 | V-shaped groove | 90 | 4.0 | 2.00 | 89.2 | 1 | 0.150 |
| | 5 | V-shaped groove | 60 | 2.0 | 1.75 | 89.6 | 1 | 0.129 |
| | 6 | Sawtoothed groove (FIG. 3) | 60 | 2.0 | 0.70 | 89.6 | 1 | 0.094 |
| | 7 | Sawtoothed groove (FIG. 4) | 60 | 2.0 | 0.70 | 89.6 | 1 | 0.086 |
| | 8 | V-shaped groove | 90 | 5.0 | 1.00 | 89.0 | 1 | 0.085 |
| | 9 | V-shaped groove | 90 | 5.0 | 1.00 | 80.0 | 10 | 0.085 |
| | 10 | V-shaped groove | 90 | 5.0 | 1.00 | 70.0 | 21 | 0.082 |
| | 11 | V-shaped groove | 90 | 5.0 | 1.00 | 60.0 | 32 | 0.078 |
| | 12 | V-shaped groove | 90 | 5.0 | 1.00 | 45.0 | 57 | 0.060 |
| Comparative Example | | Smooth surface processing | | | | | | 0.045 |

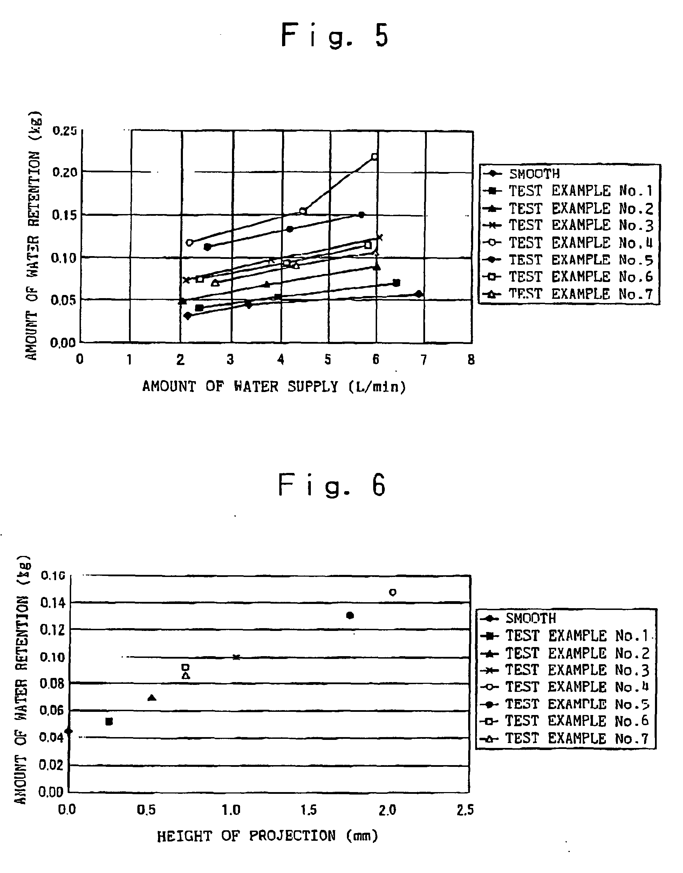

FIG. 5 shows the relationship between the amount of water supply and the amount of water retention in the examples and comparative example. FIG. 6 shows the relationship between the height of the projection (groove depth h)and the amount of water retention.

As shown in FIG. 5,in the examples in which a spiral groove was formed, the amount of water retention was increased at a groove pitch P of 1.0 mm or more in comparison with the comparative example in which the surface of the electrode was smooth without being provided with a spiral groove. In particular, an excellent water retention effect was obtained in the test examples Nos. 3, 4, and 5 in which the groove pitch P was 2.0 mm or more.

As shown in FIG. 6, the amount of water retention was increased in the examples, in which a spiral groove was formed in comparison with the comparative example in which the surface of the electrode was smooth without being provided with a spiral groove. In particular, an excellent water retention effect was obtained In the test examples Nos. 3 to 7 in which the groove depth was 0.8 mm or more. The water retention effect was improved to a large extent in the test examples Nos. 4 and 5 in which the groove depth was 1.75 mm or more.

### INDUSTRIAL APPLICABILITY

According to the present invention, a graphite electrode for steelmaking of which oxidation and consumption during the operation can be effectively suppressed and which can reduce the electrode consumption rate can be provided.

## Claims

1. A graphite electrode for an electric arc furnace used for steelmaking which is operated while cooling the graphite electrode which protrudes upward from the furnace roof by spraying a cooling liquid onto the outer surface of the graphite electrode, wherein a spiral groove is formed on the outer surface of the electrode, said spiral groove having a spiral angle of 45° or more but less than 90°, a groove pitch P of 0.2 to 10 mm, and a groove depth h of 0.2 to 5 mm.

## Patentansprüche

1. Eine Graphitelektrode für einen elektrischen Lichtbogenofen zur Stahlerzeugung, welcher unter Kühlung der Graphitelektrode betrieben wird, wobei die vom Dach des Ofens her aufwärts hinausragende Graphitelektrode durch Besprühen der Außenfläche der Graphitelektrode mit einer Kühlflüssigkeit gekühlt wird, wobei wiederum eine spiralförmige Rille auf der Außenfläche der Elektrode ausgebildet ist, die spiralförmige Rille aufweisend einen Spiralwinkel von 45° oder mehr, aber weniger als 90°, eine Rillen-Breite von 0,2 bis 10 mm und eine Rillen-Tiefe von 0,2 bis 5 mm.

## Revendications

1. Une électrode de graphite pour un four à l'arc électrique, utilisée pour la fabrication de l'acier qui fonctionne en refroidissant l'électrode de graphite qui dépasse le plafond du four vers le haut, en atomisant un liquide de refroidissement sur la surface extérieure de l'électrode; une cannelure en spirale étant formée dans la surface extérieure de l'électrode, et cette cannelure en spirale présentant un angle de la spirale de 45° ou plus, toutefois inférieur à 90°, le pas P de la cannelure étant de 0,2 à 10 mm et la profondeur h de la cannelure de 0,2 à 5 mm.
